# EUROPÄISCHE PATENTSCHRIFT

(11) **EP 3 173 601 B1**
(45) Veröffentlichungstag und Bekanntmachung des Hinweises auf die Patenterteilung: **14.03.2018**
(21) Anmeldenummer: 16199578.2
(22) Anmeldetag: 18.11.2016
(51) Int. Cl.: F02B 75/04, F16K 15/02

(54) **RÜCKSCHLAGVENTIL FÜR EIN PLEUEL FÜR EINE VARIABLE VERDICHTUNG EINER BRENNKRAFTMASCHINE SOWIE PLEUEL MIT EINEM DERARTIGEN RÜCKSCHLAGVENTIL**
NON-RETURN VALVE FOR A CONNECTING ROD FOR A VARIABLE COMPRESSION OF AN INTERNAL COMBUSTION ENGINE, AND CONNECTING ROD WITH SUCH A NON-RETURN VALVE
CLAPET DE NON-RETOUR POUR UNE BIELLE POUR UNE COMPRESSION VARIABLE D'UN MOTEUR À COMBUSTION INTERNE ET BIELLE COMPRENANT UN TEL CLAPET DE NON-RETOUR

(30) Priorität: 25.11.2015 DE 102015120359; 25.11.2015 DE 102015120443; 03.06.2016 DE 102016110279
(43) Veröffentlichungstag der Anmeldung: 31.05.2017
(73) Patentinhaber: Hilite Germany GmbH, 97828 Marktheidenfeld (DE)
(72) Erfinder: Diehm, Alexander, 97877 Wertheim-Dertingen (DE); Jung, Christian, 15890 Eisenhüttenstadt (DE); Schulze, Dietmar, 35516 Münzenberg (DE)

(56) Entgegenhaltungen:
- EP-A1- 2 821 619
- DE-A1-102007 016 625
- DE-A1-102007 018 068
- DE-A1-102012 112 481

## Beschreibung

### Technisches Gebiet

Die Erfindung betrifft ein Rückschlagventil für ein Pleuel für eine variable Verdichtung einer Brennkraftmaschine mit wenigstens einer Hydraulikkammer, wobei die Hydraulikkammer des Pleuels mittels des Rückschlagventils mit einem Versorgungsanschluss bzw. einem Tank verbindbar ist, wobei das Rückschlagventil ein topfförmiges Ventilgehäuse und einen entlang einer Ventillängsachse axial verschieblichen Ventilschließkörper aufweist, welcher mittels einer Ventilfeder gegen einen Ventilsitz vorgespannt ist, sowie ein Pleuel mit einem derartigen Rückschlagventil.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulischen Umschaltventilen eine Exzenter-Verstelleinrichtung eines Pleuels betätigen.

Ein derartiges Pleuel ist beispielsweise aus der DE 10 2013 107 127 A1 bekannt und umfasst eine Exzenter-Verstelleinrichtung zur Verstellung einer effektiven Pleuelstangenlänge, wobei die Exzenter-Verstelleinrichtung einen mit einem Exzenterhebel zusammenwirkenden Exzenter aufweist, sowie zwei Kolben, welche jeweils in einer Hydraulikkammer verschiebbar geführt sind und in welchen an dem Exzenterhebel angreifende Exzenterstangen der Exzenter-Verstelleinrichtung gelagert sind. Ein Verstellweg der Exzenter-Verstelleinrichtung ist mittels eines Umschaltventils verstellbar. Durch die Änderung des Verstellwegs wird die effektive Pleuelstangenlänge geändert. Damit kann die Verdichtung einer Brennkraftmaschine gesteuert werden. Rückschlagventile im Pleuel verhindern jeweils einen Rückfluss von Hydraulikfluid aus den Hydraulikkammern zu einem Versorgungsanschluss bzw. einem Tank.

Aus der DE 10 2012 112 481 A1 ist ein hierzu geeignetes Rückschlagventil bekannt.

### Offenbarung der Erfindung

Eine Aufgabe der Erfindung ist es, ein anderes, verbessertes Rückschlagventil und ferner ein verbessertes Pleuel mit einem Rückschlagventil zu schaffen.

Die vorgenannten Aufgaben werden gelöst mit den Merkmalen der unabhängigen Ansprüche.

Günstige Ausgestaltungen und Vorteile der Erfindung ergeben sich aus den weiteren Ansprüchen, der Beschreibung und der Zeichnung.

Die Erfindung geht aus von einem Rückschlagventil für ein Pleuel für eine variable Verdichtung einer Brennkraftmaschine mit wenigstens einer Hydraulikkammer, wobei die Hydraulikkammer des Pleuels mittels des Rückschlagventils mit einem Versorgungsanschluss bzw. einem Tank verbindbar ist, und wobei das Rückschlagventil ein Ventilgehäuse und einen entlang einer Ventillängsachse axial zwischen einer geöffneten und einer geschlossenen Position verschieblichen Ventilschließkörper aufweist, welcher mittels einer Ventilfeder gegen einen Ventilsitz vorgespannt ist.

### 1

Es wird vorgeschlagen, dass ein dornförmiger Führungskörper vorgesehen ist, welcher die Ventilfeder durchragt und mittels welchem die Ventilfeder sowohl in der geöffneten Position als auch in der geschlossenen Position des Ventilschließkörpers geführt ist.

Vorteilhaft kann durch die Führung der Ventilfeder vermieden werden, dass die Ventilfeder beim Öffnen oder Schließen des Rückschlagventils verkantet oder verklemmt. Der Führungskörper erstreckt sich vorteilhaft zumindest von einem Ende der Ventilfeder bis zum gegenüberliegenden Ende der Ventilfeder, d.h. in ihrer gesamten Länge, sowohl im gestauchten als auch im gestreckten Betriebszustand der Ventilfeder. Günstigerweise erlaubt die Konstruktion des Rückschlagventils eine Hubbegrenzung des Ventilschließkörpers.

Die Erfindung erlaubt eine Führung der Ventilfeder über die ganze Länge, so dass kein Zwischenraum entstehen kann, in welchen die Ventilfeder bei Querkräften hineingeraten und somit verkanten oder zerstört werden kann. Die Betriebssicherheit des Rückschlagventils ist verbessert. Der Führungskörper kann in dem Ventilschließkörper geführt sein. Ist die Ventilfeder auf dem Ventilschließkörper als Führungskörper angeordnet, kann der Ventilschließkörper auf seinem ganzen Umfang geführt werden. Ein Verkippen desselben ist somit ausgeschlossen.

Vorteilhafterweise ist der Ventilschließkörper in dem Ventilgehäuse geführt vorgesehen. Damit steht dem Ventilschließkörper eine vergleichsweise lange Führungsstrecke zur Verfügung, so dass auch ein Verkippen oder Verkanten des Ventilschließkörpers ausgeschlossen ist.

Nach einer günstigen Ausgestaltung einer ersten Ausführung des Rückschlagventils der dornförmige Führungskörper ortsfest mit dem Ventilgehäuse ausgebildet und in den Ventilschließkörper eintauchbar vorgesehen sein.

Dabei ist es für die Führung des Ventilschließkörpers vorteilhaft, wenn der Ventilschließkörper als Ventilschließkolben ausgebildet ist, welcher mittels der Ventilfeder gegen einen Boden des Ventilgehäuses als Ventilsitz vorgespannt ist, wobei die Ventilfeder mittels des in dem Ventilschließkolben geführten Führungskörpers des Halteelementes geführt vorgesehen ist.

Nach einer günstigen Ausgestaltung kann das Ventilgehäuse topfförmig ausgebildet sein. Dies erlaubt eine einfache Herstellung des Ventilgehäuses. Vorteilhaft kann das Ventilgehäuse ein Einschraubgehäuse sein, das einfach in ein Pleuel eingeschraubt werden kann.

Nach einer günstigen Ausgestaltung kann der Boden des Ventilgehäuses eine bezogen auf die Ventillängsachse axial angeordnete Öffnung aufweisen, welche dem Versorgungsanschluss bzw. dem Tank zugeordnet und mittels des Ventilschließkolbens verschließbar ist. Dies erlaubt eine einfache Herstellung des Versorgungsanschlusses des Ventilgehäuses.

Nach einer günstigen Ausgestaltung können ein oder mehrere Axialbohrungen im Ventilschließkolben vorgesehen sein, um bei Öffnung des Ventilschließkörpers einen Durchfluss von Hydraulikflüssigkeit in Richtung Hydraulikkammer zu ermöglichen. Durch die Axialbohrungen im Ventilschließkolben kann auf aufwändige Radialbohrungen im Ventilgehäuse verzichtet werden und der Ventilschließkolben auf seinem ganzen Umfang geführt sein.

Nach einer günstigen Ausgestaltung kann der Ventilschließkörper einen Innenraum aufweisen, in welchen der Führungskörper geführt vorgesehen und in welchen der Führungskörper bei Öffnung des Ventilschließkörpers eintauchbar ist. Dies erlaubt eine zuverlässige Betätigung des Ventilschließkörpers sowie eine sichere Führung der Ventilfeder auf ihrer ganzen Länge.

Nach einer günstigen Ausgestaltung kann der Ventilschließkörper ein oder mehrere radiale Entlüftungsbohrungen aufweisen, welche in die Axialbohrungen münden. Vorteilhaft kann der Ventilschließkörper zum Führungskörper entlüftet werden

In einer alternativen zweiten Ausführung des Rückschlagventils kann der dornförmige Führungskörper mit dem Ventilschließkörper bewegbar ausgebildet und in das Ventilgehäuse oder einem in dem Ventilgehäuse angeordneten Deckel eintauchbar vorgesehen sein.

Vorzugsweise kann dabei der Ventilschließkörper den dornförmigen Führungskörper aufweisen, mittels welchem die Ventilfeder geführt ist, wobei der Führungskörper in dem Ventilgehäuse oder einem in dem Ventilgehäuse angeordneten Deckel führbar ist. Der Deckel kann günstig in das Ventilgehäuse eingepresst sein.

Nach einer günstigen Ausgestaltung dieser alternativen Ausführung kann ein Verschlusselement des Ventilgehäuses eine bezogen auf die Ventillängsachse axial angeordnete Öffnung aufweisen, welche dem Versorgungsanschluss bzw. dem Tank zugeordnet und mittels des Ventilschließkörpers verschließbar ist. Dies erlaubt eine einfache Konstruktion des Rückschlagventils.

Nach einer alternativen günstigen Ausgestaltung dieser alternativen Ausführung kann der Boden des Ventilgehäuses eine bezogen auf die Ventillängsachse axial angeordnete Öffnung aufweisen, welche dem Versorgungsanschluss bzw. dem Tank zugeordnet und mittels des Ventilschließkörpers verschließbar ist. Dies erlaubt eine einfache Konstruktion des Rückschlagventils.

Nach einer günstigen Ausgestaltung dieser alternativen Ausführung können ein oder mehrere Axialbohrungen im Ventilschließkörper vorgesehen sein, um bei Öffnung des Ventilschließkörpers einen Durchfluss von Hydraulikflüssigkeit in Richtung Hydraulikkammer zu ermöglichen.

Alternativ hierzu kann der Ventilschließkörper ein oder mehrere Vertiefungen aufweisen, um bei Öffnung des Ventilschließkörpers einen Durchfluss von Hydraulikflüssigkeit in Richtung Hydraulikkammer zu ermöglichen.

Als Material für das Rückschlagventil kann in den genannten Ausführungen vorteilhaft Stahl, Aluminium, Aluminiumlegierung oder Kunststoff verwendet sein.

Nach einer weiteren Aspekt der Erfindung wird ein Pleuel vorgeschlagen für eine variable Verdichtung einer Brennkraftmaschine mit wenigstens einer Hydraulikkammer, wobei die Hydraulikkammer mittels eines Rückschlagventils gemäß einem oder mehreren der vorstehend beschriebenen Merkmalen mit einem Versorgungsanschluss bzw. einer Lagerschale bzw. einem Tank des Pleuels verbindbar ist.

Die Rückschlagventile des Pleuels können identisch aufgebaut sein, oder eines der Rückschlagventile kann entsprechend der ersten beschriebenen Ausführung und das andere der Rückschlagventile entsprechend der zweiten Ausführung ausgebildet sein

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Pleuel nach einer Ausgestaltung der Erfindung;
- Fig. 2: ein Rückschlagventil nach einem Ausführungsbeispiel der Erfindung im Längsschnitt, bei dem eine Ventilfeder auf einem Führungskörper geführt ist, der in einem Ventilschließkörper geführt ist;
- Fig. 3: ein Rückschlagventil nach einem weiteren Ausführungsbeispiel der Erfindung im Längsschnitt, bei dem eine Ventilfeder auf einem Ventilschließkörper als Führungskörper geführt ist;
- Fig. 4: ein Rückschlagventil nach einem weiteren Ausführungsbeispiel der Erfindung im Längsschnitt, bei dem eine Ventilfeder auf einem Ventilschließkörper als Führungskörper geführt ist; und
- Fig. 5: ein Rückschlagventil nach einem weiteren Ausführungsbeispiel der Erfindung im Längsschnitt, bei dem eine Ventilfeder auf einem Ventilschließkörper als Führungskörper geführt ist.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

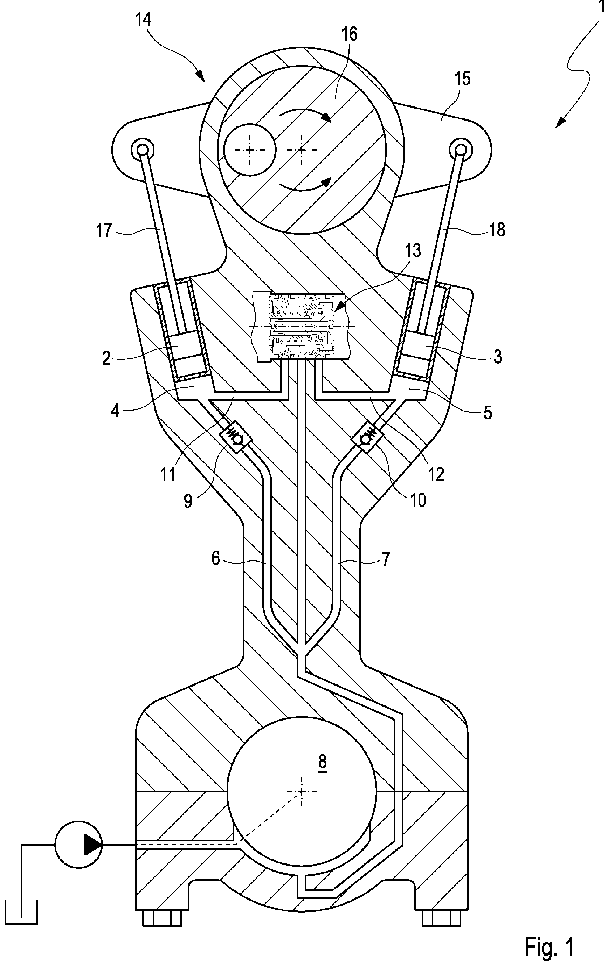

Figur 1 zeigt in schematischer Darstellung ein erfindungsgemäßes Pleuel 1 für eine variable Verdichtung einer Brennkraftmaschine, mit einer Exzenter-Verstelleinrichtung 14 zur Verstellung einer effektiven Pleuelstangenlänge. Die Exzenter-Verstelleinrichtung 14 weist einen mit einem ein- oder mehrteiligen Exzenterhebel 15 zusammenwirkenden Exzenter 16 auf. Dabei ist ein Verstellweg der Exzenter-Verstelleinrichtung 14 mittels eines Umschaltventils 13 verstellbar.

Eine Verdrehung der verstellbaren Exzenter-Verstelleinrichtung 14 wird durch Einwirken von Massen- und Lastkräften des Verbrennungsmotors initiiert, die bei einem Arbeitstakt des Verbrennungsmotors auf die Exzenter-Verstelleinrichtung wirken. Während eines Arbeitstaktes verändern sich die Wirkungsrichtungen der auf die Exzenter-Verstelleinrichtung 14 wirkenden Kräfte kontinuierlich. Die Drehbewegung oder Verstellbewegung wird durch einen oder mehreren mit Hydraulikflüssigkeit, insbesondere mit Motoröl, beaufschlagte, im Pleuel 1 integrierte Kolben 2, 3 unterstützt, bzw. die Kolben 2, 3 verhindern ein Rückstellen der Exzenter-Verstelleinrichtung 14 aufgrund variierender Kraftwirkungsrichtungen der auf die Exzenter-Verstelleinrichtung 14 wirkenden Kräfte.

Die Kolben 2, 3 sind mittels Exzenterstangen 17, 18 beidseitig mit dem Exzenterhebel 15 wirkverbunden. Die Kolben 2, 3 sind in Hydraulikkammern 4, 5 verschiebbar angeordnet und über Hydraulikflüssigkeitsleitungen 6, 7 von dem Hublagerauge 8 aus mit Hydraulikflüssigkeit über Rückschlagventile 9, 10 beaufschlagt, deren Aufbau im nachfolgenden näher erläutert wird. Diese in Figur 1 lediglich schematisch dargestellten Rückschlagventile 9, 10 verhindern ein Rückfließen der Hydraulikflüssigkeit aus den Hydraulikkammern 4, 5 zurück in die Hydraulikflüssigkeitsleitungen 6, 7 in eine Lagerschale des Hublagerauges 8 bzw. einen nicht näher bezeichneten Tank und ermöglichen ein Nachsaugen von Hydraulikflüssigkeit in die Hydraulikkammern 4, 5. Die Hydraulikkammern 4, 5 sind mit weiteren Hydraulikflüssigkeitsleitungen 11, 12 verbunden, welche mit dem Umschaltventil zusammenwirken.

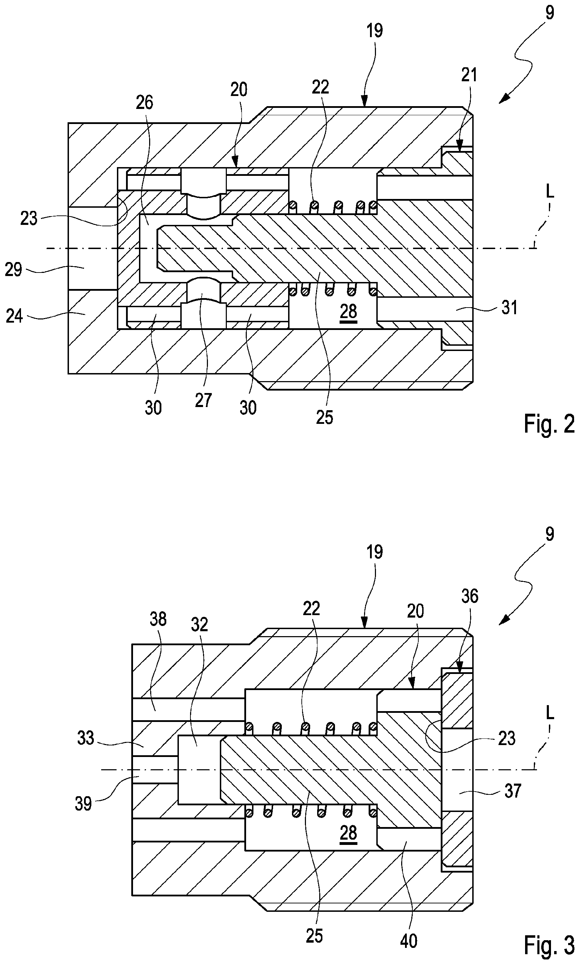

Figur 2 zeigt eine erste Ausführung des ersten Rückschlagventils 9 im Längsschnitt, wobei das zweite Rückschlagventil 10 gleich aufgebaut sein kann, so dass nachfolgend lediglich das Rückschlagventil 9 beschrieben ist.

Das Rückschlagventil 9 weist ein topfförmiges Ventilgehäuse 19 und einen entlang einer Ventillängsachse L axial verschieblichen Ventilschließkörper 20 auf, welcher mittels einer zwischen dem Ventilschließkörper 20 und einem in dem Ventilgehäuse 19 befestigten Halteelement 21 angeordneten Ventilfeder 22 gegen einen Ventilsitz 23 vorgespannt ist.

Der Ventilschließkörper 20 ist als Ventilschließkolben ausgebildet, welcher in dem Ventilgehäuse 19 geführt und mittels der Ventilfeder 22 gegen einen Boden 24 des Ventilgehäuses 19 als Ventilsitz vorgespannt ist. Die Ventilfeder 22 ist mittels eines dornförmigen, in dem Ventilschließkolben 20 geführten Führungskörpers 25 des Halteelementes 21 geführt vorgesehen. Der dornförmige Führungskörper 25, welcher die Ventilfeder 22 in ihrer gesamten Länge durchragt, ist bei dieser Ausführung ortsfest mit dem Ventilgehäuse 19 ausgebildet und in den Ventilschließkörper 20 eintauchbar vorgesehen. Bei einer Verschiebung des Ventilschließkolbens 30 taucht der Führungskörpers 25 mit seinem freien Ende in einen Innenraum 26 des Ventilschließkolbens 20. Ein oder mehrere radiale Entlüftungsbohrungen 27 des Ventilschließkolbens 20 ermöglichen dabei einen Austausch von Hydraulikflüssigkeit zwischen dem Innenraum 26 und einem Innenraum 28 des Ventilgehäuses 19.

Der Boden 24 des Ventilgehäuses 19 weist eine bezogen auf die Ventillängsachse L axial angeordnete Öffnung 29 auf, welche dem Versorgungsanschluss bzw. dem Tank (nicht dargestellt) zugeordnet und mittels des Ventilschließkolbens 20 verschließbar ist.

Im Falle eines Nachsaugens von Hydraulikflüssigkeit wird der Ventilschließkolben 20 gegen die Federkraft der Ventilfeder 22 geöffnet. Die über die Öffnung 29 eingesaugte Hydraulikflüssigkeit kann über ein oder mehrere Axialbohrungen 30 des Ventilschließkolbens 20 den Innenraum des Ventilgehäuses 19 und axialen Öffnungen 31 im Halteelement 21 in Richtung Hydraulikkammer 4 (Figur 1) strömen. Wie aus Figur 2 ersichtlich ist, münden die Entlüftungsbohrungen 27 in die Axialbohrungen 30 des Ventilschließkolbens 20. Aus fertigungstechnischen Gründen erstrecken sich die Entlüftungsbohrungen 27 bis zu einer Außenseite des Ventilschließkolbens 20.

Der erfindungsgemäße verbesserte Aufbau der Rückschlagventile 9, 10 erlaubt eine Führung der Ventilfeder 22 über die ganze Länge, so dass kein Zwischenraum entstehen kann, in welchen die Ventilfeder 22 bei Querkräften hineingeraten und somit zerstört werden kann.

Ferner ist bei der beschriebenen Ausführung des Ventilschließkörpers 20 als vorteilhaft anzusehen, dass auf Radialbohrungen im Ventilgehäuse 19 verzichtet werden kann, da dieses vorzugsweise in das Pleuel 1 eingeschraubt vorgesehen ist. Hierdurch ist weiter von Vorteil, dass der Ventilschließkörper 20 auf seinem ganzen Umfang geführt werden kann. Ein Verkippen ist somit ausgeschlossen.

Die Figuren 3 bis 5 zeigen Varianten einer alternativen Ausführung des ersten Rückschlagventils 9 im Längsschnitt, wobei das zweite Rückschlagventil 10 gleich aufgebaut sein kann, so dass nachfolgend lediglich das Rückschlagventil 9 beschrieben ist.

Das Rückschlagventil 9 weist ein Ventilgehäuse 19 und einen entlang einer Ventillängsachse L axial verschieblichen Ventilschließkörper 20 auf, welcher mittels einer Ventilfeder 22 gegen einen Ventilsitz 23 vorgespannt ist.

Der Ventilschließkörper 20 ist in dem Ventilgehäuse 19 geführt vorgesehen und weist einen dornförmigen Führungskörper 25 auf, welcher die Ventilfeder 22 in ihrer gesamten Länge durchragt, so dass diese geführt ist. Dabei ist der dornförmige Führungskörper 25 mit dem Ventilschließkörper 20 bewegbar ausgebildet und in das Ventilgehäuse 19 oder einem in dem Ventilgehäuse 19 angeordneten Deckel 35 eintauchbar vorgesehen.

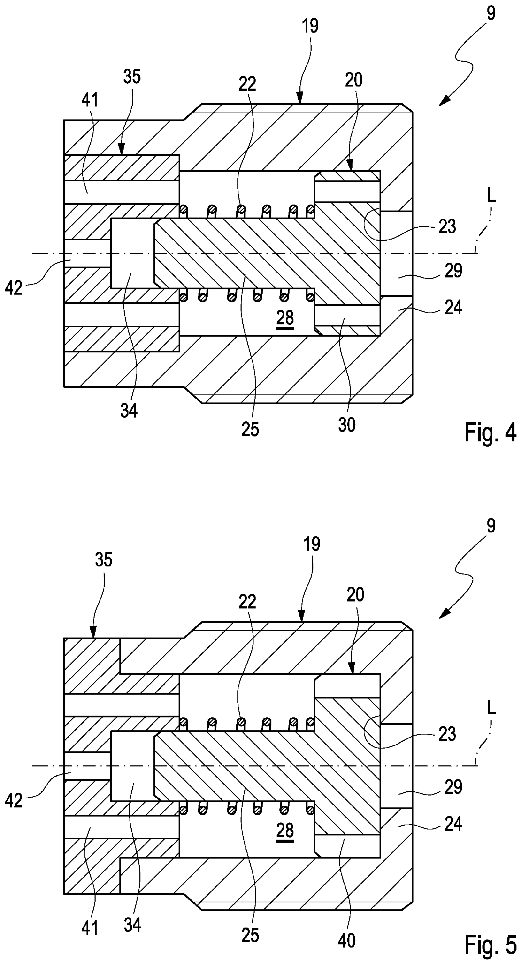

Wie den Figuren 3 bis 5 zu entnehmen ist, kann dabei der Führungskörper 25 entweder in einer Ausnehmung 32 eines Bodens 33 des Ventilgehäuses 19 (Figur 3) oder in einer Ausnehmung 34 eines Deckels 35 (Figuren 4 und 5) geführt vorgesehen sein. Der Führungskörper 25 kann als Zylinder oder auch als Platte ausgeführt sein.

Wie in Figur 3 ersichtlich ist, ist der Ventilsitz 23 an einem in dem Ventilgehäuse 19 befestigten Verschlusselement 36 angeordnet, welches eine Öffnung 37 aufweist, welche dem Versorgungsanschluss bzw. dem Tank (nicht dargestellt) zugeordnet ist und mittels dem Ventilschließkörpers 20 verschließbar ist. Der Boden 33 weist Öffnungen 38 zum Durchfluss der Hydraulikflüssigkeit in Richtung Hydraulikkammer 4 (Figur 1) auf. Ferner ist im Bereich der Ausnehmung 32 eine Entlüftungsbohrung 39 vorgesehen.

Der Ventilschließkörper 20 kann an seiner Außenseite Vertiefungen bzw. Ausnehmungen 40 (Figur 3 und 5) oder Bohrungen 30 (Figur 4) zum Durchfluss von Hydraulikflüssigkeit aufweisen.

Gemäß Figur 4 und 5 weist der Boden 24 des Ventilgehäuses 19 eine bezogen auf die Ventillängsachse L axial angeordnete Öffnung 29 auf, welche dem Versorgungsanschluss bzw. dem Tank zugeordnet und mittels des Ventilschließkörpers 20 verschließbar ist.

Der Deckel 35 weist Öffnungen 41 zum Durchfluss der Hydraulikflüssigkeit in Richtung Hydraulikkammer 4 (Figur 1) auf. Ferner ist im Bereich der Ausnehmung 34 eine Entlüftungsbohrung 42 vorgesehen.

Der erfindungsgemäße verbesserte Aufbau der Rückschlagventile 9, 10 erlaubt eine Führung der Ventilfeder 22 über die ganze Länge, so dass kein Zwischenraum entstehen kann, in welchen die Ventilfeder 22 bei Querkräften hineingeraten und somit zerstört werden kann.

Ferner ist bei der beschriebenen Ausführung des Ventilschließkörpers 20 als vorteilhaft anzusehen, dass auf Radialbohrungen im Ventilgehäuse 19 verzichtet werden kann, da dieses vorzugsweise in das Pleuel 1 eingeschraubt vorgesehen ist. Durch den Führungskörper 25 kann die Führung des Ventilschließkörpers 20 verbessert werden.

## Patentansprüche

1. Rückschlagventil (9, 10) für ein Pleuel (1) für eine variable Verdichtung einer Brennkraftmaschine mit wenigstens einer Hydraulikkammer (4, 5), wobei die Hydraulikkammer (4, 5) des Pleuels (1) mittels des Rückschlagventils (9, 10) mit einem Versorgungsanschluss bzw. einem Tank verbindbar ist, und wobei das Rückschlagventil (9, 10) ein Ventilgehäuse (19) und einen entlang einer Ventillängsachse (L) axial zwischen einer geöffneten und einer geschlossenen Position verschieblichen Ventilschließkörper (20) aufweist, welcher mittels einer Ventilfeder (22) gegen einen Ventilsitz (23) vorgespannt ist, **dadurch gekennzeichnet, dass** ein dornförmiger Führungskörper (25) vorgesehen ist, welcher die Ventilfeder (22) durchragt und mittels welchem die Ventilfeder (22) sowohl in der geöffneten Position als auch in der geschlossenen Position des Ventilschließkörpers (20) geführt ist.

2. Rückschlagventil nach Anspruch 1, **dadurch gekennzeichnet, dass** der Ventilschließkörper (20) in dem Ventilgehäuse (19) geführt vorgesehen ist.

3. Rückschlagventil nach Anspruch 1 oder 2, **dadurch gekennzeichnet, dass** der dornförmige Führungskörper (25) ortsfest mit dem Ventilgehäuse (19) ausgebildet und in den Ventilschließkörper (20) eintauchbar vorgesehen ist.

4. Rückschlagventil nach einem der vorhergehenden Ansprüche, **dadurch gekennzeichnet, dass** der Ventilschließkörper (20) als Ventilschließkolben ausgebildet ist, welcher mittels der Ventilfeder (22) gegen einen Boden (24) des Ventilgehäuses (19) als Ventilsitz (23) vorgespannt ist, wobei die Ventilfeder (22) mittels des in dem Ventilschließkolben geführten Führungskörpers (25) des Halteelementes (21) geführt vorgesehen ist.

5. Rückschlagventil nach einem der vorhergehenden Ansprüche, **dadurch gekennzeichnet, dass** das Ventilgehäuse (19) topfförmig ausgebildet ist.

6. Rückschlagventil nach einem der vorhergehenden Ansprüche, **dadurch gekennzeichnet, dass** der Boden (24) des Ventilgehäuses (19) eine bezogen auf die Ventillängsachse (L) axial angeordnete Öffnung (29) aufweist, welche dem Versorgungsanschluss bzw. dem Tank zugeordnet und mittels des Ventilschließkolbens verschließbar ist.

7. Rückschlagventil nach einem der vorhergehenden Ansprüche, **dadurch gekennzeichnet, dass** ein oder mehrere Axialbohrungen (30) im Ventilschließkolbens vorgesehen sind, um bei Öffnung des Ventilschließkörpers (20) einen Durchfluss von Hydraulikflüssigkeit in Richtung Hydraulikkammer (4, 5) zu ermöglichen.

8. Rückschlagventil nach einem der vorhergehenden Ansprüche, **dadurch gekennzeichnet, dass** der Ventilschließkörper (20) einen Innenraum (26) aufweist, in welchen der Führungskörper (25) geführt vorgesehen und in welchen der Führungskörper (25) bei Öffnung des Ventilschließkörpers (20) eintauchbar ist.

9. Rückschlagventil nach Anspruch 7 und 8, **dadurch gekennzeichnet, dass** der Ventilschließkörper (20) ein oder mehrere radiale Entlüftungsbohrungen (27) aufweist, welche in die Axialbohrungen (30) münden.

10. Rückschlagventil nach Anspruch 1 oder 2, **dadurch gekennzeichnet, dass** der dornförmige Führungskörper (25) mit dem Ventilschließkörper (20) bewegbar ausgebildet und in das Ventilgehäuse (19) oder einem in dem Ventilgehäuse (19) angeordneten Deckel (35) eintauchbar vorgesehen ist.

11. Rückschlagventil nach Anspruch 10, **dadurch gekennzeichnet, dass** der Ventilschließkörper (20) den dornförmigen Führungskörper (25) aufweist, mittels welchem die Ventilfeder (22) geführt ist, wobei der Führungskörper (25) in dem Ventilgehäuse (19) oder einem in dem Ventilgehäuse (19) angeordneten Deckel (35) geführt ist.

12. Rückschlagventil nach Anspruch 11, **dadurch gekennzeichnet, dass** ein Verschlusselement (36) des Ventilgehäuses (19) eine bezogen auf die Ventillängsachse (L) axial angeordnete Öffnung (37) aufweist, welche dem Versorgungsanschluss bzw. dem Tank zugeordnet und mittels des Ventilschließkörpers (20) verschließbar ist.

13. Rückschlagventil nach Anspruch 11, **dadurch gekennzeichnet, dass** der Boden (24) des Ventilgehäuses (19) eine bezogen auf die Ventillängsachse (L) axial angeordnete Öffnung (29) aufweist, welche dem Versorgungsanschluss bzw. dem Tank zugeordnet und mittels des Ventilschließkörpers (20) verschließbar ist.

14. Rückschlagventil nach einem der Ansprüche 11 bis 13, **dadurch gekennzeichnet, dass** ein oder mehrere Axialbohrungen (30) im Ventilschließkörper (20) vorgesehen sind, um bei Öffnung des Ventilschließkörpers (20) einen Durchfluss von Hydraulikflüssigkeit in Richtung Hydraulikkammer (4, 5) zu ermöglichen.

15. Rückschlagventil nach einem der Ansprüche 11 bis 13, **dadurch gekennzeichnet, dass** der Ventilschließkörper (20) ein oder mehrere Vertiefungen (40) aufweist, um bei Öffnung des Ventilschließkörpers (20) einen Durchfluss von Hydraulikflüssigkeit in Richtung Hydraulikkammer (4, 5) zu ermöglichen.

16. Pleuel (1) für eine variable Verdichtung einer Brennkraftmaschine mit wenigstens einer Hydraulikkammer (4, 5), wobei die Hydraulikkammer (4, 5) mittels eines Rückschlagventils (9, 10) gemäß einem der vorhergehenden Ansprüche mit einem Versorgungsanschluss bzw. einer Lagerschale bzw. einem Tank des Pleuels (1) verbindbar ist.

## Claims

1. Check valve (9, 10) for a connecting rod (1) for a variable compression of an internal combustion engine having at least one hydraulic chamber (4, 5), it being possible for the hydraulic chamber (4, 5) of the connecting rod (1) to be connected by means of the check valve (9, 10) to a supply connector or a tank, and the check valve (9, 10) having a valve housing (19) and a valve closing body (20) which can be displaced axially along a valve longitudinal axis (L) between an open and a closed position and is prestressed against a valve seat (23) by means of a valve spring (22), **characterized in that** a mandrel-shaped guide body (25) is provided which penetrates the valve spring (22) and by means of which the valve spring (22) is guided both in the open position and in the closed position of the valve closing body (20).

2. Check valve according to Claim 1, **characterized in that** the valve closing body (20) is provided in a manner which is guided in the valve housing (19).

3. Check valve according to Claim 1 or 2, **characterized in that** the mandrel-shaped guide body (25) is provided such that it is configured in a stationary manner with the valve housing (19) and such that it can dip into the valve closing body (20).

4. Check valve according to one of the preceding claims, **characterized in that** the valve closing body (20) is configured as a valve closing piston which is prestressed by means of the valve spring (22) against a bottom (24) of the valve housing (19) as a valve seat (23), the valve spring (22) being provided in a manner which is guided by means of that guide body (25) of the holding element (21) which is guided in the valve closing piston.

5. Check valve according to one of the preceding claims, **characterized in that** the valve housing (19) is of pot-shaped configuration.

6. Check valve according to one of the preceding claims, **characterized in that** the bottom (24) of the valve housing (19) has an opening (29) which is arranged axially in relation to the valve longitudinal axis (L), is assigned to the supply connector or the tank, and can be closed by means of the valve closing piston.

7. Check valve according to one of the preceding claims, **characterized in that** one or more axial bores (30) is/are provided in the valve closing piston, in order to make a throughflow of hydraulic liquid in the direction of the hydraulic chamber (4, 5) possible in the case of opening of the valve closing body (20).

8. Check valve according to one of the preceding claims, **characterized in that** the valve closing body (20) has an interior space (26), in which the guide body is provided in a guided manner and into which the guide body (25) can dip in the case of opening of the valve closing body (20).

9. Check valve according to Claims 7 and 8, **characterized in that** the valve closing body (20) has one or more radial ventilating bores (27) which opens/open into the axial bores (30).

10. Check valve according to Claim 1 or 2, **characterized in that** the mandrel-shaped guide body (25) is configured such that it can be moved with the valve closing body (20), and is provided such that it can dip into the valve housing (19) or a cover (35) which is arranged in the valve housing (19).

11. Check valve according to Claim 10, **characterized in that** the valve closing body (20) has the mandrel-shaped guide body (25), by means of which the valve spring (22) is guided, the guide body (25) being guided in the valve housing (19) or a cover (35) which is arranged in the valve housing (19).

12. Check valve according to Claim 11, **characterized in that** a closure element (36) of the valve housing (19) has an opening (37) which is arranged axially in relation to the valve longitudinal axis (L), is assigned to the supply connector or the tank, and can be closed by means of the valve closing body (20).

13. Check valve according to Claim 11, **characterized in that** the bottom (24) of the valve housing (19) has an opening (29) which is arranged axially in relation to the valve longitudinal axis (L), is assigned to the supply connector or the tank, and can be closed by means of the valve closing body (20).

14. Check valve according to one of Claims 11 to 13, **characterized in that** one or more axial bores (30) is/are provided in the valve closing body (20), in order to make a throughflow of hydraulic liquid in the direction of the hydraulic chamber (4, 5) possible in the case of opening of the valve closing body (20).

15. Check valve according to one of Claims 11 to 13, **characterized in that** the valve closing body (20) has one or more depressions (40), in order to make a throughflow of hydraulic liquid in the direction of the hydraulic chamber (4, 5) possible in the case of opening of the valve closing body (20).

16. Connecting rod (1) for a variable compression of an internal combustion engine having at least one hydraulic chamber (4, 5), it being possible for the hydraulic chamber (4, 5) of the connecting rod (1) to be connected by means of a check valve (9, 10) according to one of the preceding claims to a supply connector or a bearing shell or a tank of the connecting rod (1).

## Revendications

1. Clapet de non-retour (9, 10) pour une bielle (1) pour une compression variable d'un moteur à combustion interne avec au moins une chambre hydraulique (4, 5), dans lequel la chambre hydraulique (4, 5) de la bielle (1) peut être connectée à un raccord d'alimentation ou à un réservoir au moyen du clapet de non-retour (9, 10), et dans lequel le clapet de non-retour (9, 10) présente un boîtier de soupape (19) et un corps de fermeture de soupape (20) déplaçable axialement le long d'un axe longitudinal de soupape (L) entre une position ouverte et une position fermée, lequel est précontraint contre un siège de soupape (23) au moyen d'un ressort de soupape (22), **caractérisé en ce qu'**il est prévu un corps de guidage en forme de mandrin (25), qui passe à travers le ressort de soupape (22) et au moyen duquel le ressort de soupape (22) est guidé aussi bien dans la position ouverte que dans la position fermée du corps de fermeture de soupape (20).

2. Clapet de non-retour selon la revendication 1, **caractérisé en ce que** le corps de fermeture de soupape (20) est prévu de façon guidée dans le boîtier de soupape (19).

3. Clapet de non-retour selon la revendication 1 ou 2, **caractérisé en ce que** le corps de guidage en forme de mandrin (25) est réalisé solidairement avec le boîtier de soupape (19) et il est prévu sous une forme pouvant pénétrer dans le corps de fermeture de soupape (20).

4. Clapet de non-retour selon l'une quelconque des revendications précédentes, **caractérisé en ce que** le corps de fermeture de soupape (20) est réalisé sous forme de piston de fermeture de soupape, qui est précontraint au moyen du ressort de soupape (22) contre un fond (24) du boîtier de soupape (19) en tant que siège de soupape (23), dans lequel le ressort de soupape (22) est prévu de façon guidée au moyen du corps de guidage (25) de l'élément de maintien (21) guidé dans le piston de fermeture de soupape.

5. Clapet de non-retour selon l'une quelconque des revendications précédentes, **caractérisé en ce que** le boîtier de soupape (19) est réalisé en forme de pot.

6. Clapet de non-retour selon l'une quelconque des revendications précédentes, **caractérisé en ce que** le fond (24) du boîtier de soupape (19) présente une ouverture (29) disposée axialement par rapport à l'axe longitudinal de soupape (L), laquelle est associée au raccord d'alimentation ou au réservoir et peut être fermée au moyen du piston de fermeture de soupape.

7. Clapet de non-retour selon l'une quelconque des revendications précédentes, **caractérisé en ce qu'**il est prévu un ou plusieurs trous axiaux (30) dans le piston de fermeture de soupape, afin de permettre un écoulement de liquide hydraulique en direction de la chambre hydraulique (4, 5) lors de l'ouverture du corps de fermeture de soupape (20).

8. Clapet de non-retour selon l'une quelconque des revendications précédentes, **caractérisé en ce que** le corps de fermeture de soupape (20) présente un espace intérieur (26), dans lequel le corps de guidage (25) est prévu de façon guidée et dans lequel le corps de guidage (25) peut pénétrer lors de l'ouverture du corps de fermeture de soupape (20).

9. Clapet de non-retour selon la revendication 7 ou 8, **caractérisé en ce que** le corps de fermeture de soupape (20) présente un ou plusieurs trous de ventilation radiaux (27), qui débouchent dans les trous axiaux (30).

10. Clapet de non-retour selon la revendication 1 ou 2, **caractérisé en ce que** le corps de guidage en forme de mandrin (25) avec le corps de fermeture de soupape (20) est réalisé de façon mobile et est prévu sous une forme pouvant pénétrer dans le boîtier de soupape (19) ou dans un couvercle (35) disposé dans le boîtier de soupape (19).

11. Clapet de non-retour selon la revendication 10, **caractérisé en ce que** le corps de fermeture de soupape (20) présente le corps de guidage en forme de mandrin (25), au moyen duquel le ressort de soupape (22) est guidé, dans lequel le corps de guidage (25) est guidé dans le boîtier de soupape (19) ou dans un couvercle (35) disposé dans le boîtier de soupape (19).

12. Clapet de non-retour selon la revendication 11, **caractérisé en ce qu'**un élément de fermeture (36) du boîtier de soupape (19) présente une ouverture (37) disposée axialement par rapport à l'axe longitudinal de soupape (L), laquelle est associée au raccord d'alimentation ou au réservoir et peut être fermée au moyen du corps de fermeture de soupape (20).

13. Clapet de non-retour selon la revendication 11, **caractérisé en ce que** le fond (24) du boîtier de soupape (19) présente une ouverture (29) disposée axialement par rapport à l'axe longitudinal de soupape (L), laquelle est associée au raccord d'alimentation ou au réservoir et peut être fermée au moyen du corps de fermeture de soupape (20).

14. Clapet de non-retour selon l'une quelconque des revendications 11 à 13, **caractérisé en ce qu'**il est prévu un ou plusieurs trous axiaux (30) dans le corps de fermeture de soupape (20), afin de permettre un écoulement de liquide hydraulique en direction de la chambre hydraulique (4, 5) lors de l'ouverture du corps de fermeture de soupape (20).

15. Clapet de non-retour selon l'une quelconque des revendications 11 à 13, **caractérisé en ce que** le corps de fermeture de soupape (20) présente un ou plusieurs creux (40), afin de permettre un écoulement de liquide hydraulique en direction de la chambre hydraulique (4, 5) lors de l'ouverture du corps de fermeture de soupape (20).

16. Bielle (1) pour une compression variable d'un moteur à combustion interne avec au moins une chambre hydraulique (4, 5), dans laquelle la chambre hydraulique (4, 5) peut être connectée à un raccord d'alimentation ou à une coquille de coussinet ou à un réservoir de la bielle (1) au moyen d'un clapet de non-retour (9, 10) selon l'une quelconque des revendications précédentes.
